# DEMANDE DE BREVET EUROPEEN

(11) **EP 3 093 831 A1**
(43) Date de publication de la demande: **16.11.2016**
(21) Numéro de dépôt: 16169003.7
(22) Date de dépôt: 10.05.2016
(51) Int. Cl.: G09B 9/08

(54) **SYSTEME, PROCEDE ET SUPPORT LISIBLE PAR ORDINATEUR POUR FORMATION AU PILOTAGE**

(30) Priorité: 12.05.2015 US 201562160424 P; 10.07.2015 US 201514796591
(71) Demandeur: Airbus (S.A.S.), 31700 Blagnac (FR)
(72) Inventeur: WHELLER, Katharyn, 31140 PECHBONNIEU (FR); MAZENQ, Jean-Charles, 31400 TOULOUSE (FR); DUPUY, Jacques-André, 81600 TECOU (FR); METIVET, Stéphane, 31320 CASTANET TOLOSAN (FR)
(74) Mandataire: Sarraméa, Claude

(57) **Abrégé**

Un système (100) de formation au pilotage dispense une formation pour des pilotes d'avion. Dans certains exemples, le système comprend un ou plusieurs ordinateurs et un ou plusieurs supports lisibles par ordinateur non-transitoires (204) stockant des instructions qui, lorsqu'elles sont exécutées par le ou les ordinateurs, font en sorte que le ou les ordinateurs dispensent la formation au pilotage. En fonctionnement, les ordinateurs exécutent un module de formation pédagogique (206) pour présenter à un élève une séquence structurée de tâches d'entraînement, un module de formation par simulation (208) pour offrir à l'élève une capacité de jeu libre dans un environnement d'avion simulé, et un noyau d'intégration (210) pour faire passer l'élève entre le module de formation pédagogique et le module de formation par simulation.

## Description

### DOMAINE TECHNIQUE

Le sujet décrit dans la présente description concerne de manière générale des systèmes informatiques pour la formation au pilotage, par exemple des systèmes informatiques exécutant un logiciel qui intègre un logiciel de formation pédagogique à simulateur de vol.

### ARRIERE-PLAN

Une formation efficace au pilotage est importante pour préparer les pilotes à différentes situations de vol. Des systèmes informatiques de formation au pilotage peuvent améliorer la vitesse et l'efficacité de la formation au pilotage. Par exemple, un simulateur de vol est un environnement constitué d'un ensemble de dispositifs et d'applications logicielles capables de reproduire les performances d'un avion. Les simulateurs de vol peuvent offrir une exposition à différents scénarios de vol à des pilotes pour les préparer à ces scénarios lors de vols réels.

Les systèmes informatiques actuels de formation au pilotage comprennent des systèmes informatiques de formation pédagogique qui dispensent des leçons interactives pas à pas avec des éléments de guidage et des éléments théoriques. Certains autres systèmes informatiques de formation au pilotage comprennent des systèmes informatiques qui fournissent un accès libre à un simulateur de vol, par exemple des simulateurs de vol qui offrent aux élèves un accès libre à des éléments de guidage ainsi qu'à des éléments théoriques. Ces deux types de systèmes de formation au pilotage sont utilisés d'une manière isolée, par exemple l'un après l'autre, d'une manière séquentielle.

### RESUME

L'invention est relative à un système de formation au pilotage selon la revendication 1.

Dans certains exemples, le système comprend un ou plusieurs ordinateurs et un ou plusieurs supports lisibles par ordinateur non-transitoires stockant des instructions qui, lorsqu'elles sont exécutées par le ou les ordinateurs, font en sorte que le ou les ordinateurs dispensent la formation au pilotage. En fonctionnement, les ordinateurs exécutent un module de formation pédagogique pour présenter à un élève une séquence structurée de tâches d'entraînement, un module de formation par simulation pour offrir à l'élève une capacité de jeu libre dans un environnement d'avion simulé par ordinateur, et un noyau d'intégration pour faire passer l'élève entre le module de formation pédagogique et le module de formation par simulation.

Le sujet décrit dans la présente description peut être mis en oeuvre par des moyens matériels, des moyens logiciels, des microprogrammes, ou toute combinaison de ceux-ci. En tant que tels, les termes "fonction" et "module", tels qu'utilisés ici font référence à des composants matériels, des composants logiciels et/ou des microprogrammes pour la mise en oeuvre de la ou des caractéristiques décrites. Dans certains exemples, le sujet décrit dans la présente description peut être mis en oeuvre à l'aide d'un support lisible par ordinateur non-transitoire stockant des instructions exécutables par ordinateur qui, lorsqu'elles sont exécutées par le processeur d'un ordinateur, font en sorte que l'ordinateur exécute des étapes.

Des supports lisibles par ordinateurs appropriés pour la mise en oeuvre du sujet décrit dans la présente demande comprennent les supports lisibles par ordinateur non-transitoires, tels que des dispositifs de mémoire à disques, des dispositifs de mémoire à puce, des dispositif logiques programmables, une mémoire vive (RAM), une mémoire morte (ROM), une mémoire à lecture/écriture optique, une mémoire cache, une mémoire à lecture/écriture magnétique, une mémoire flash, et des circuits intégrés spécifiques d'application. De plus, un support lisible par ordinateur qui met en oeuvre le sujet décrit dans la présente demande peut être situé sur un seul dispositif ou une seule plateforme informatique ou être distribué sur plusieurs dispositifs ou plateformes informatiques.

L'invention est également relative à un procédé de formation au pilotage selon la revendication 11.

L'invention est également relative à un support ou à des supports lisibles par ordinateur selon la revendication 14.

### BREVE DESCRIPTION DES DESSINS

La Figure 1 illustre un exemple de système informatique de formation au pilotage ;
La Figure 2 est un schéma fonctionnel de l'exemple de système informatique de formation au pilotage ;
La Figure 3 est un schéma fonctionnel illustrant des exemples de composants du noyau, du module de formation pédagogique, et du module de formation par simulation ;
La Figure 4 est un schéma séquentiel illustrant des exemples de messages échangés entre les composants du système dans un exemple de séquence ;
La Figure 5 est un diagramme d'état d'un exemple de machine d'état de tâche d'élève ; et
La Figure 6 est un organigramme d'un exemple de procédé exécuté par un système informatique.

### DESCRIPTION DETAILLEE

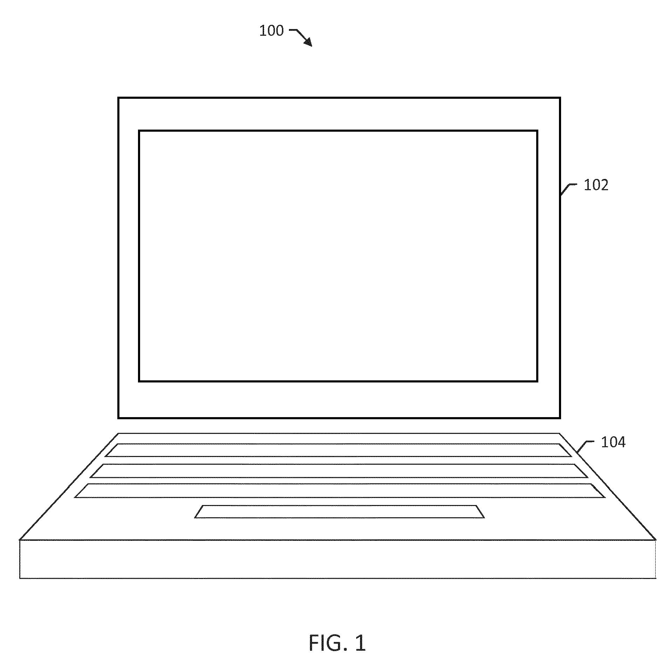

La Figure 1 représente un schéma fonctionnel d'un exemple de système informatique de formation au pilotage 100 pour la formation au pilotage. Le système informatique 100 comprend un dispositif d'affichage 102 et un dispositif d'entrée utilisateur 104. Par exemple, le système informatique 100 peut être un ordinateur portable, un ordinateur de bureau, une tablette, un dispositif mobile, ou tout dispositif informatique approprié pour la formation au pilotage.

Le dispositif d'entrée utilisateur 104 peut être aussi simple qu'un clavier ou une souris ou un pavé tactile, et le système informatique 100 peut comprendre tout dispositif d'entrée utilisateur approprié. Dans certains exemples, le système informatique simule différents dispositifs d'entrée utilisateur dans un cockpit d'avion. Dans certains exemples, le système informatique 100 est intégré à un environnement simulateur de vol physique incluant différents dispositifs d'entrée utilisateur qui correspondent à des dispositifs d'entrée physiques dans un cockpit d'avion.

Pour satisfaire aux exigences d'une formation au pilotage plus efficace, le système informatique 100, selon certains aspects, est configuré, grâce à une programmation appropriée, pour dispenser une formation au pilotage selon un paradigme d'apprentissage constructiviste : le système informatique 100 utilise une technologie de simulation pour aider à engager les élèves dans un processus qui leur offre l'interaction qu'ils souhaitent avec le retour d'informations dont ils ont besoin dans des situations en temps réel.

Le système informatique 100 permet à des individus ou à un équipage de suivre une leçon sans instructeur en mode autodidacte, grâce à un logiciel qui offre des capacités de guidage, de suivi et de rattrapage. Le système informatique 100 intègre pleinement des aspects pédagogiques de formation au pilotage à un environnement de simulation traditionnel.

Supposons, par exemple, que le système informatique 100 est en train de dispenser une formation sur la Fonction de Navigation Aéroportuaire (ANF), qui aide l'équipage à naviguer sur des aéroports, et améliore donc la perception que l'équipage a du sol. Le système informatique dispense une formation pédagogique, par exemple, en donnant à l'élève l'instruction que l'équipage doit toujours utiliser des repères visuels externes pour la navigation aéroportuaire en tant que référence principale.

Après avoir dispensé à l'élève une instruction pédagogique concernant l'utilisation de l'ANF, le système informatique 100 fait passer l'élève à une simulation dans laquelle l'élève interagit avec une interface utilisateur ANF simulée. Le système informatique fait ensuite sortir l'élève de la simulation lorsque la simulation atteint un certain état de simulation, par exemple lorsqu'un avion simulé atteint une certaine porte.

Dans un autre exemple, le système informatique 100 dispense une instruction pédagogique concernant l'utilisation du système de surveillance électronique central de l'avion (ECAM) en cas de fonctionnement anormal. Pendant certaines parties de l'instruction pédagogique, le système informatique 100 fait passer l'élève à une simulation dans laquelle l'élève interagit avec le système ECAM. Le système informatique fait ensuite sortir l'élève de la simulation lorsque la simulation atteint un certain état de simulation, par exemple lorsque l'élève a éteint un moteur approprié.

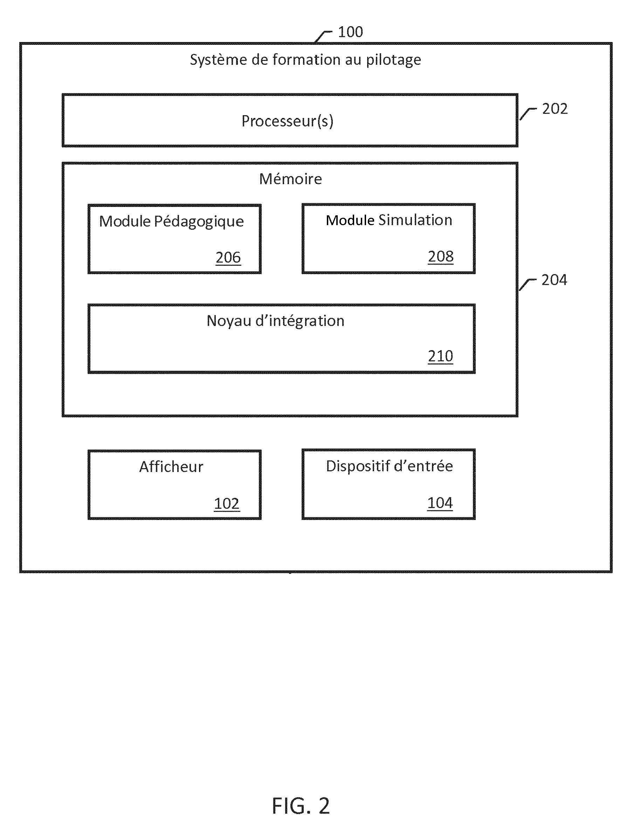

La Figure 2 est un schéma fonctionnel de l'exemple de système informatique de formation au pilotage 100. Le système informatique 100 comprend un ou plusieurs processeurs ou coeurs de processeurs 202 et une mémoire 204 pour stocker le logiciel de formation au pilotage. La mémoire 204 peut être mise en oeuvre sous la forme de toute structure de mémoire appropriée. Par exemple, la mémoire 204 peut inclure un ou plusieurs supports lisibles par ordinateur non-transitoires, par exemple, des disques durs ou des disques à mémoire flash, stockant le logiciel. Le logiciel peut être chargé dans une mémoire vive (RAM) pour être exécuté par les processeurs 202.

Le système informatique 100 comprend un module de formation pédagogique 206, un module de formation par simulation 208, et un noyau d'intégration 210 pour l'intégration du module de formation pédagogique 206 et du module de formation par simulation 208. Le module de formation pédagogique 206 présente une séquence structurée de tâches d'entraînement à un élève. Le module de formation pédagogique 206 présente une leçon interactive étape par étape avec des éléments de guidage et des éléments théoriques.

Le module de formation par simulation 208 offre à l'élève une capacité de jeu libre dans un environnement d'avion simulé par ordinateur. Le module de formation par simulation 208 fournit une simulation logique d'un système d'avion avec un accès libre à des éléments de guidage et des éléments théoriques. Par exemple, le module de formation par simulation 208 fournit un cockpit virtuel interactif en 3D dans un environnement d'équipage, par exemple avec deux pilotes. Le module de formation par simulation 208, selon certains aspects, simule une interaction avec un équipage dans un environnement totalement intégré.

Le noyau d'intégration 210 fait passer l'élève entre le module de formation pédagogique et le module de formation par simulation. Le noyau d'intégration 210 permet une session en jeu libre pour l'élève, avec le module de formation par simulation 208, dans une leçon guidée fournie par le module de formation pédagogique 206. Le noyau d'intégration 210, en association avec le module de formation pédagogique 206 et le module de formation par simulation 208, sont utilisés pour intégrer différents types de formation dans un seul exercice d'entraînement pour fournir une formation d'une manière logique plutôt que de la manière séquentielle classique.

En fonctionnement, le système informatique 100 utilise un état de simulation d'avion du module de formation par simulation 208 pour commander la pédagogie plutôt que d'utiliser simplement l'interaction avec l'environnement de cockpit. Par exemple, le système informatique 100, en utilisant le noyau d'intégration 210, affiche tout type de média approprié en réponse à un état de simulation préprogrammé du module de formation par simulation 208, par exemple le système informatique affiche une fenêtre en langage HTML ("Hypertext Markup Language") avec du contenu théorique pur dans la simulation.

Dans un autre exemple, le système informatique 100 passe à une étape suivante en fonction de l'état de simulation du module de formation par simulation 208, ce qui offre des possibilités de jeu libre dans une leçon guidée. D'autres actions de membres d'équipage peuvent être incluses dans la leçon guidée pour simuler un environnement réel.

L'exécution du module de formation pédagogique 206 et du module de formation par simulation 208 permet l'animation de différents scénarios d'interaction homme-machine pour l'élève:
- Cockpit virtuel
- Fenêtre pédagogique avec du contenu théorique pur
- Listes d'actions ou d'objectifs
- Retours d'informations et mises en évidence
- Message de guidage
- Messages sonores (Instructeur virtuel)

Le système informatique 100 de la Figure 2 peut être un système informatique d'usage général qui devient un système informatique à usage spécial pour les besoins de la formation au pilotage grâce à un logiciel à usage spécial installé sur le système 100. Le noyau d'intégration 210 apporte un effet technique au système informatique 100 en permettant à un module de formation pédagogique et à un module de formation par simulation de s'exécuter sur la même plateforme informatique, ce qui réduit les besoins en équipement informatique sophistiqué pour la mise en oeuvre de la formation au pilotage.

De plus, le noyau d'intégration 210 assure une communication et une intégration rationnalisées entre le module de formation pédagogique et le module de formation par simulation, ce qui réduit les besoins en ressources informatiques telles qu'un espace de mémoire vive et des cycles de traitement sur le système informatique 100. Dans certains exemples, la réutilisation de logiciels de formation pédagogique et par simulation classiques réduit le temps de développement d'un logiciel de formation selon un paradigme d'apprentissage constructiviste.

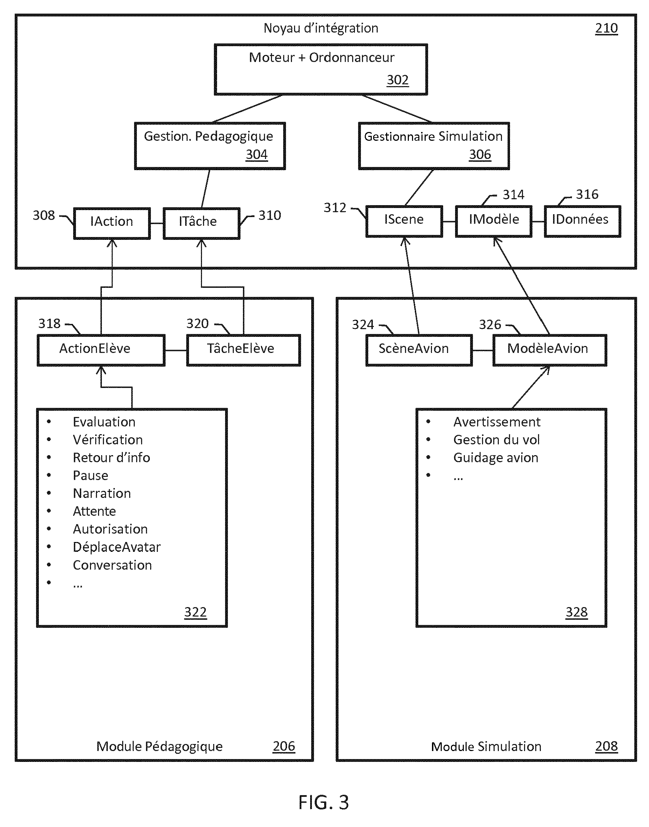

La Figure 3 est un schéma fonctionnel illustrant des exemples de composants du noyau 210, du module de formation pédagogique 206 et du module de formation par simulation 208. Le noyau comprend un moteur et un ordonnanceur en temps réel 302, un gestionnaire pédagogique 304 et un gestionnaire de simulation 306.

Le gestionnaire pédagogique 304 gère des objets ITâche 310 et IAction 308 pour le module de formation pédagogique 206. Le gestionnaire de simulation 306 gère des objets IScène 312, IModèle 314 et IDonnées 316 pour le module de formation par simulation 208. En général, ces objets peuvent être implémentés à l'aide de toute approche appropriée pour la conception d'un logiciel. Par exemple, le logiciel peut être implémenté à l'aide d'une approche de programmation par contrat pour la conception d'un logiciel, dans laquelle les objets sont des contrats. Les objets peuvent être abstraits et être implémentés par le module de formation pédagogique 206 et le module de formation par simulation 308.

Le module de formation pédagogique 206 gère des objets ActionElève 318 et TâcheElève 320. L'objet ActionElève 318 suit et évalue les actions effectuées par l'élève. L'objet TâcheElève 320 suit les tâches et fait passer l'élève d'une tâche à la suivante dans une séquence de tâches. L'élève peut effectuer l'une quelconque de différentes actions en réponse à des tâches. Des exemples de tâches 322 présentées à l'élève ou exécutées par l'élève comprennent une tâche Evaluation, une tâche Vérification, une tâche Retour d'information, une tâche Pause, une tâche Narration, une tâche Attente, une tâche Autorisation, une tâche Déplacement Avatar et une tâche Conversation.

Le module de formation par simulation 208 gère des objets ScèneAvion 324 et ModèleAvion 326. Le module de formation par simulation 208 met à jour l'objet ModèleAvion 326 en fonction d'événements de simulation 328, par exemple des événements Avertissement, Gestion du vol et Guidage avion. L'environnement d'avion est constitué de systèmes pour lesquels un équipement interactif peut être manipulé par l'élève. Lorsqu'une modélisation logique de l'avion réel est intégrée, la manipulation de l'équipement par l'élève est traduite en modifications systématiques du contexte de l'avion simulé et des données simulées associées.

Les tâches de l'objet TâcheElève 320 comprennent N actions séquentielles (étapes). Selon les objectifs des leçons, des tâches étape par étape sont incluses dans leurs définitions par déclaration d'un point d'entrée et d'un point de fin. Les fils des leçons sont, dans ces cas, considérés comme la progression des étapes séquentielles des tâches. Dans certains exemples, le noyau 210 fait avancer le système d'une étape à la suivante en réponse à la détermination du fait qu'une étape en cours a été achevée.

Le noyau 210 reconnaît plusieurs étapes héritées qui permettent de créer des actions complexes pour couvrir les objectifs requis d'une leçon. La progression d'une tâche, selon certains aspects, est automatique (pour un mode démonstration) ou fonction d'une manipulation de l'équipement d'avion par l'élève et/ou d'expressions logiques qui peuvent être calculées à partir de la combinaison de valeurs de données de simulation.

En plus de la progression d'une tâche, le noyau 210 met en oeuvre un ensemble de déclencheurs. Le noyau 210 calcule et/ou vérifie les déclencheurs en temps réel ou presque en temps réel et reproduit une collection d'effets lorsqu'ils sont validés (sur front montant, sur front descendant, jusqu'à cochage, jusqu'à décochage). Par exemple, un déclencheur peut être ajouté à une tâche pour déclencher une défaillance système ou un comportement dangereux à un moment simulé prédéfini. Le calcul des étapes séquentielles d'une tâche et de la collection de déclencheurs, selon certains aspects, est considéré comme le calcul de la pédagogie de la leçon et est ordonnancé par l'ordonnanceur en temps réel 302 utilisé pour le calcul du comportement de l'avion simulé.

Dans certains exemples, l'environnement d'avion comprend des systèmes pour lesquels un équipement interactif est manipulé par des actions de l'élève. Lorsqu'une modélisation logique de l'avion réel est intégrée, les actions de l'élève sur l'équipement sont traduites en modifications systématiques du contexte de l'avion simulé et des données simulées associées.

Dans certains exemples, les étapes d'une tâche sont architecturées et organisées en deux modes de calcul principaux:
- Mode Données de Simulation:
   Lorsque ce mode est sélectionné, toutes les interactions de l'élève dans le cockpit virtuel en 3D sont traduites par des modifications de données de simulation en fonction des comportements de l'équipement manipulé. Les étapes d'une tâche sont validées lorsqu'une ou plusieurs variables de l'état de simulation du module de formation par simulation atteint des valeurs préprogrammées ou lorsque des expressions logicielles dédiées deviennent vraies. Les étapes principales d'une tâche selon le mode données de simulation sont définies avec une structure de données ActionDonnéesEvaluation. La structure ActionDonnéesEvaluation est accompagnée d'un minuteur de validation afin de donner à un utilisateur l'opportunité de placer les dispositifs dans les bonnes positions attendues. Des effets spécifiques sont mis en oeuvre lorsqu'un équipement inattendu est utilisé par l'élève au cours des leçons, par exemple en fournissant des messages de guidage ou des mises en évidence.
- Mode Vérification:
   Lorsque ce mode est sélectionné, toutes les interactions de l'élève dans le cockpit virtuel de l'environnement d'avion sont traduites par une vérification d'équipement. Les étapes d'une tâche sont validées lorsque l'équipement attendu est vérifié par l'utilisateur. Un effet spécifique est mis en oeuvre lorsqu'un mauvais équipement est vérifié par l'utilisateur au cours des leçons, par exemple en fournissant des messages de guidage ou des mises en évidence.

Le mode de calcul de leçon peut être modifié au cours des leçons par intégration de commandes spécifiques pour établir les comportements d'interaction de l'utilisateur. Dans certains exemples, il est possible d'établir un mode calcul exclusif ou de composer le mode calcul avec les deux modes de calcul principaux. Le mode interaction élève peut également être établi de façon à définir les degrés de liberté lors d'une interaction avec le cockpit virtuel.

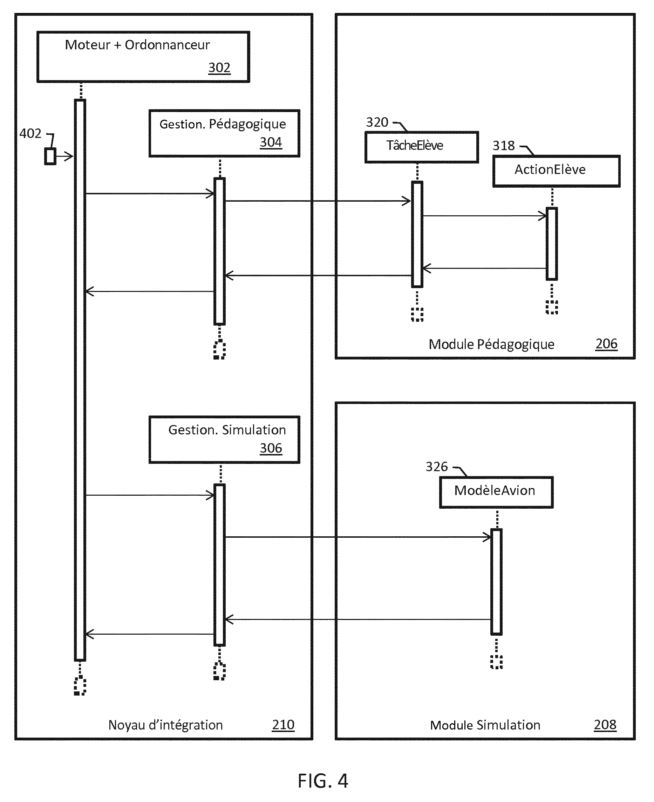

La Figure 4 est un schéma séquentiel illustrant des exemples de messages échangés entre les composants du système dans un exemple de séquence. Le schéma séquentiel présente des messages échangés au fil du temps du haut du schéma vers le bas du schéma. A titre d'illustration, les messages sont représentés au-dessus du noyau 210, du module de formation pédagogique 206 et du module de formation par simulation 208 pour illustrer quel composant envoie quel message.

Une fonction horloge 402 est appelée par le noyau 210 à intervalles périodiques, par exemple une fois toutes les 50 ms pour une fréquence de 20 Hz. Pour être compatible avec le temps réel, le temps écoulé pour calculer les deux parties est inférieur ou égal à la durée souhaitée pour l'étape de calcul (1/fréquence).

Dans l'exemple de séquence illustrée sur la Figure 4, premièrement, l'ordonnanceur en temps réel 302 demande au gestionnaire pédagogique 304 d'exécuter sa fonction. Le gestionnaire pédagogique 304 exécute la TâcheElève 320. La TâcheElève 320 exécute l'action en cours par l'ActionElève 318. Des messages de retour sont renvoyés à l'ordonnanceur en temps réel 302.

Deuxièmement, l'ordonnanceur en temps réel 302 demande au gestionnaire de simulation 306 d'exécuter sa fonction. Le gestionnaire de simulation 306 demande à tous les modèles d'avion 326 d'exécuter leurs fonctions. Par exemple, le gestionnaire de simulation 306 boucle à travers chaque modèle et envoie une demande à chaque modèle.

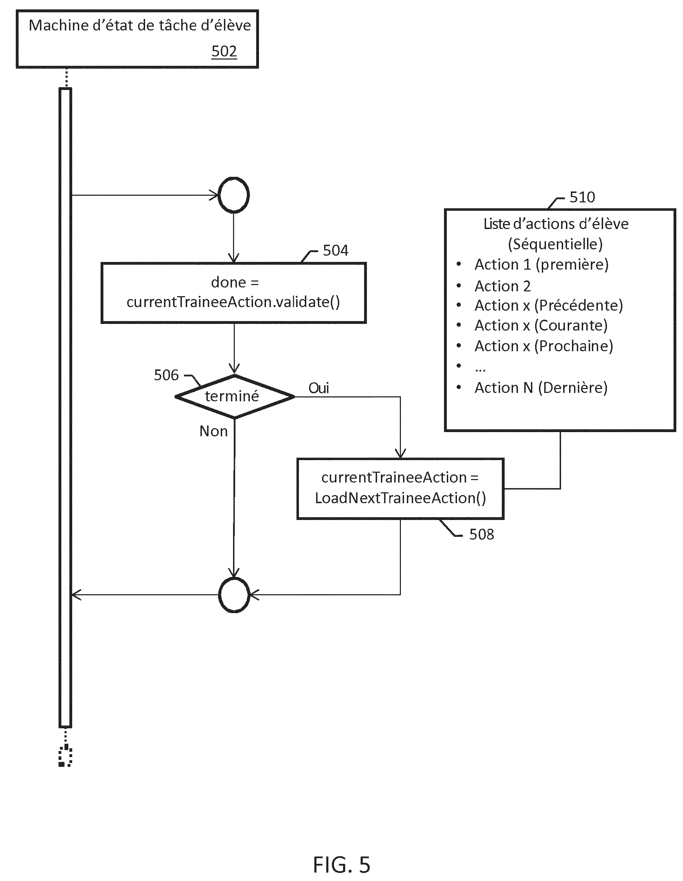

La Figure 5 est un diagramme d'état d'un exemple de machine d'état de tâche d'élève 502. La machine d'état 502 est par exemple implémentée dans le noyau 210 ou le module de formation pédagogique 206, ou les deux. Le noyau 210 met à jour, par exemple par l'ordonnanceur en temps réel 302, la tâche d'élève en cours, qui comprend des actions d'élève.

Tandis que l'élève exécute une action d'élève, la machine d'état 502 boucle entre la validation 504 de l'action d'élève en cours et la détermination du fait que l'action est terminée ou non 506. Lorsque l'élève a achevé l'action, la machine d'état 502 détermine que l'action est terminée et charge l'action d'élève suivante 508 à partir d'une liste d'actions d'élève 510. La liste d'actions d'élèves 510 comprend une liste séquentielle d'actions d'élève.

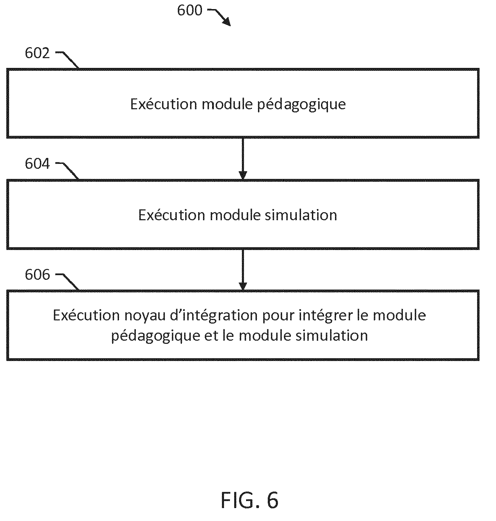

La Figure 6 est un organigramme d'un exemple de procédé 600 exécuté par un système informatique. Le système informatique exécute un module de formation pédagogique (602) et un module de formation par simulation (604). Le système informatique exécute un noyau d'intégration (606) pour intégrer le module de formation pédagogique au module de formation par simulation en faisant passer un élève entre le module de formation pédagogique et le module de formation par simulation.

Différentes combinaisons et sous-combinaisons des structures et caractéristiques décrites dans le présent document sont envisageables dans le cadre de l'invention. L'un quelconque des différents éléments et caractéristiques décrits dans le présent document peuvent être combinés avec un ou plusieurs autres éléments et caractéristiques, sauf mention contraire dans le présent document. De manière correspondante, le sujet tel que revendiqué ci-après doit être considéré et interprété au sens large, en incluant toutes les variations, modifications et formes de réalisation alternatives couvertes, ainsi que les équivalents des revendications.

Dans la présente description, les termes "comprend" ou "comprenant" n'excluent pas d'autres éléments ou étapes, les termes "un/une" ou "un/une seul(e)" n'excluent pas un nombre pluriel, et le terme "ou" signifie l'un ou l'autre ou les deux. En outre, des caractéristiques ou étapes qui ont été décrites peuvent également être utilisées en combinaison avec d'autres caractéristiques ou étapes et dans un ordre quelconque, sauf si la description ou le contexte suggère le contraire.

## Revendications

1. Système (100) de formation au pilotage, le système comprenant :
un ou plusieurs ordinateurs ; et
un ou plusieurs supports lisibles par ordinateur non-transitoires (204) stockant des instructions qui, lorsqu'elles sont exécutées par le ou les ordinateurs, font en sorte que le ou les ordinateurs dispensent la formation au pilotage, **caractérisé en ce que** les instructions comprennent :
un module de formation pédagogique (206) pour présenter à un élève une séquence structurée de tâches d'entraînement ;
un module de formation par simulation (208) pour offrir à l'élève une capacité de jeu libre dans un environnement d'avion simulé par ordinateur; et
un noyau d'intégration (210) pour faire passer l'élève entre le module de formation pédagogique et le module de formation par simulation.

2. Système selon la revendication 1, dans lequel le passage de l'élève entre le module de formation pédagogique et le module de formation par simulation comprend l'autorisation d'une session de jeu libre pour l'élève, avec le module de formation par simulation (208), dans une leçon guidée fournie par le module de formation pédagogique (206).

3. Système selon l'une des revendications 1 ou 2, dans lequel le passage de l'élève entre le module de formation pédagogique et le module de formation par simulation comprend le suivi d'un état de simulation du module de formation par simulation et le passage de l'élève du module de formation par simulation au module de formation pédagogique lorsque l'état de simulation atteint un état pédagogique préprogrammé.

4. Système selon l'une quelconque des revendications précédentes, dans lequel le passage de l'élève entre le module de formation pédagogique et le module de formation par simulation comprend le suivi, en temps réel ou en temps quasi réel, d'un état de simulation du module de formation par simulation pour un ou plusieurs déclencheurs et, en réponse à la validation de l'un des déclencheurs, la reproduction d'un ou plusieurs effets sur le module de formation par simulation en fonction de données provenant du module de formation pédagogique.

5. Système selon la revendication 4, dans lequel la reproduction d'un ou plusieurs effets sur le module de formation par simulation comprend le déclenchement d'une défaillance système ou d'un comportement dangereux à un moment simulé prédéfini.

6. Système selon l'une quelconque des revendications précédentes, dans lequel le noyau d'intégration comprend une machine d'état intégrée pour l'activation d'une deuxième étape d'une tâche en réponse à la détermination du fait qu'une première étape a été achevée par l'élève selon une leçon préprogrammée.

7. Système selon l'une quelconque des revendications précédentes, dans lequel le module de formation par simulation est configuré pour présenter, sur un dispositif d'affichage (102), un cockpit virtuel en 3D comprenant un équipement simulé, de telle sorte qu'une ou plusieurs interactions d'élève dans le cockpit virtuel 3D soient traduites par des modifications de données de simulation en fonction de comportements respectifs de l'équipement simulé.

8. Système selon l'une quelconque des revendications précédentes, dans lequel le module de formation par simulation est configuré pour présenter, sur un dispositif d'affichage (102), un ou plusieurs parmi des affichages de retour d'information, des affichages de mise en évidence, et des messages de guidage.

9. Système selon l'une quelconque des revendications précédentes, dans lequel le module de formation pédagogique est configuré pour présenter une fenêtre pédagogique ayant un ou plusieurs contenus théoriques purs.

10. Système selon l'une quelconque des revendications précédentes, dans lequel le module de formation pédagogique est configuré pour exécuter un instructeur virtuel pour fournir, par un ou plusieurs haut-parleurs, un ou plusieurs messages sonores à l'élève.

11. Procédé (600) de formation au pilotage exécuté par un ou plusieurs ordinateurs, **caractérisé en ce qu'**il comprend :
l'exécution, par le ou les ordinateurs, d'un module de formation pédagogique (206) pour la présentation à un élève d'une séquence structurée de tâches d'entraînement ;
l'exécution, par le ou les ordinateurs, d'un module de formation par simulation (208) pour offrir à l'élève une capacité de jeu libre dans un environnement d'avion simulé par ordinateur ; et
l'exécution, par le ou les ordinateurs, d'un noyau d'intégration (210) pour le passage de l'élève entre le module de formation pédagogique et le module de formation par simulation.

12. Procédé selon la revendication 11, dans lequel le passage de l'élève entre le module de formation pédagogique et le module de formation par simulation comprend l'autorisation d'une session de jeu libre pour l'élève, avec le module de formation par simulation (208), dans une leçon guidée fournie par le module de formation pédagogique (206).

13. Procédé selon l'une des revendications 11 ou 12, dans lequel le module de formation par simulation est configuré pour présenter, sur un dispositif d'affichage (102), un cockpit virtuel en 3D comprenant un équipement simulé, de telle sorte qu'une ou plusieurs interactions d'élève dans le cockpit virtuel 3D soient traduites par des modifications de données de simulation en fonction de comportements respectifs de l'équipement simulé.

14. Support ou supports lisibles par ordinateur non-transitoires (204) stockant des instructions qui, lorsqu'elles sont exécutées par le ou les ordinateurs, font en sorte que le ou les ordinateurs dispensent une formation au pilotage, **caractérisé en ce que** les instructions comprennent :
un module de formation pédagogique (206) pour présenter à un élève une séquence structurée de tâches d'entraînement ;
un module de formation par simulation (208) pour offrir à l'élève une capacité de jeu libre dans un environnement d'avion simulé par ordinateur; et
un noyau d'intégration (210) pour faire passer l'élève entre le module de formation pédagogique et le module de formation par simulation.
